Europäisches Patentamt

(19) European Patent Office

Office européen des brevets

(11) Numéro de publication: **0 102 897**
**B1**

(12) **FASCICULE DE BREVET EUROPÉEN**

(45) Date de publication du fascicule du brevet:
04.02.87

(21) Numéro de dépôt: **83401703.0**

(22) Date de dépôt: **24.06.83**

(51) Int. Cl.⁴: **G 11 B 5/41**

(54) **Dispositif de nettoyage automatique d'une tête de lecture d'appareil enregistreur à cassette.**

(30) Priorité: **26.06.82 FR 8214663**

(43) Date de publication de la demande:
**14.03.84 Bulletin 84/11**

(45) Mention de la délivrance du brevet:
**04.02.87 Bulletin 87/6**

(84) Etats contractants désignés:
**AT BE CH DE GB IT LI LU NL SE**

(56) Documents cité:
**BE-A-678 979**
**DE-A-2 423 288**
**FR-A-2 227 596**
**US-A-3 595 584**
**US-A-3 636 276**
**US-A-3 964 104**

(73) Titulaire: **Groupement d'Intérêt Economique MEDILEC GIE., 7, rue Edouard Jacques, F-75014 Paris (FR)**

(72) Inventeur: **Bouchlaghem, Daniel, 15 Avenue Ch. De Gaulle, F-78230 Le Pecq (FR)**
Inventeur: **Berger, Catherine, 15 Rue Raspail, F-92270 Bois- Colombes (FR)**

(74) Mandataire: **Thevenet, Jean- Bruno, Cabinet BEAU DE LOMENIE 55 rue d'Amsterdam, F-75008 Paris (FR)**

## Description

La présente invention a pour objet un dispositif de nettoyage automatique d'une tête magnétique de lecture d'une bande magnétique pour appareil enregistreur à cassette, comprenant une brosse escamotable capable de venir en contact avec la tête de lecture, des moyens de détection de présence de cassette dans l'appareil, et des moyens d'entraînement de la brosse escamotable commandés par les moyens de détection de présence de cassette dans l'appareil.

Le problème de nettoyage de la tête de lecture se pose dans tous les systèmes de lecture de bandes magnétiques.

En effet, au fur et à mesure des lectures, une fine poussiere de ferrite se dépose sur la cellule magnétique et vient altérer le signal lu. Cette fine poussière de ferrite constitue une sorte de court-circuit magnétique qui modifie le niveau du signal lu et tend à augmenter les parasites en cas de grande vitesse de défilement. On reproduit ainsi un signal dont l'amplitude est atténuée et la reconstitution inexacte.

Le problème du nettoyage de la tête de lecture est ainsi plus particulièrement critique dans le cas de matériel d'instrumentation destiné à la reproduction et l'observation de signaux dont la morphologie et le niveau doivent être reproduits sans distorsion ou modification de manière à permettre des comparaisons valables entre signaux différents.

On connait déjà des cassettes auto-nettoyantes qui assurent un nettoyage automatique d'une tête de lecture. L'efficacite de ces cassettes n'est cependant pas toujours suffisante et le coût d'utilisation peut s'avérer élevé car, pour que le nettoyage soit efficace il est nécessaire d'utiliser des cassettes auto-nettoyantes à l'exclusion de tout autre.

On connait également par le document US A3 636 276 un système de nettoyage de la tête de lecture d'un magnétophone à cassette, selon lequel une brosse est mise en contact avec la tête de lecture en l'absence d'une cassette dans l'appareil. Dans ce système, lors de l'introduction d'une cassette, une came solidaire de la brosse est déplacée par le boîtier de la cassette et entraîne la brosse vers le bas, de sorte que la brosse est escamotée jusqu'à l'enlèvement de la cassette, ou son retournement, qui provoquent le retour de la brosse en contact avec la tête de lecture. Avec un tel type de dispositif, la brosse, qui ne présente aucun mouvement de rotation sur elle-même, n'exerce qu'une action de nettoyage incomplète et ne permet donc pas de garantir une fiabilité des lectures effectuées par la tête magnétique.

On connait également par le document de brevet US-A-3 595 584 un dispositif de nettoyage de la tête de lecture d'un appareil audio ou vidéo, qui comprend une brosse pouvant être entraînée en rotation par un moteur électrique. A des instants déterminés, par exemple lors d'un changement de piste, la tête de lecture est éloignée de la bande magnétique et l'ensemble brosse-moteur électrique est déplacé en translation pour amener la brosse en contact avec la tête magnétique. La brosse est alors entraîné en rotation sur elle-même par le moteur associé pour effectuer un nettoyage de la tête, puis l'ensemble brosse-moteur est de nouveau éloigné de la tête de lecturé. Un tel dispositif est coûteux et complexe à réaliser et ne permet pas de procéder facilement à des nettoyages répétés et rapides car chaque opération de nettoyage implique plusieurs manoeuvres et le déplacement d'un ensemble mécanique relativement complexe.

La présente invention vise pécisément a remédier aux inconvénients précités et à permettre un nettoyage automatique et systématique d'une tête de lecture entre chaque opération de lecture d'une cassette afin de garantir pour chaque nouvelle lecture une intégrité parfaite de la tête magnétique et fournir ainsi une qualité du signal lu qui reste intacte en fonction du temps.

L'invention a encore pour but de réaliser un dispositif de nettoyage qui soit peu couteux, rélativement peu encombrant et facilement adaptable à des appareils existants.

Ces buts sont atteints grâce à un dispositif de nettoyage caractérisé en ce qu'il comprend en outre des capteurs de la position de la brosse constitués par des micro-contacts de fin de course fixes coopérant avec une butée solidaire d'une tige de support de la brosse déplaçable perpendiculairement à la tête de lecture, et des moyens de commutation associés auxdits capteurs, aux moyens de détection de présence de cassette, et aux moyens d'entraînement de la brossé escamotable, pour assurer l'entraînement de façon sélective en rotation et en translation de la brosse escamotable à chaque retrait d'une cassette, de telle sorte que la brosse présente au moins un mouvement d'aller et retour au cours duquel elle vient en contact avec la tête magnétique en présentant un mouvement de rotation sur elle-même, et en ce que les moyens d'entraînement et de transmission de mouvement associés à la brosse comprennent un moteur éléctrique a courant continu, un système de poulies et courroie, un écrou fixe de guidage et une tige filetée solidaire, d'une poulie réceptrice, et d'autre part, d'une tige de support de la brosse.

Cet agencement permet de conférer à la brosse un mouvement axial d'avance en translation et simultanément un mouvement de rotation autour de son axe.

De façon plus particulière, les moyens de commutation comprennent un relais de mise en marche et d'inversion du sens de marche du moteur d'entraînement en rotation de la brosse, lequel relais est commandé en fonction de l'état des capteurs de la position de la brosse; et un circuit électronique qui n'autorise la commande du relais que si les moyens de détection de présence de cassette signalent le retrait d'une cassette.

De la sorte, il est réalisé automatiquement un mouvement d'aller et retour de la brosse.

A titre d'exemple, le circuit électronique comprend un transistor dont la base est reliée à l'émetteur, lui-même mis à la masse, par une résistance et un condensateur en série, le point commun de la résistance et du condensateur étant lui-même relié par l'intermédiaire d'un contact de présence de cassette soit à une source d'alimentation en tension, soit à la borne de la bobine du relais qui n'est pas connectée à la masse.

Selon une caractéristique avantageuse, le dispositif de nettoyage est disposé dans un carter sous la tête de lecture et la brosse est située à l'état de repos sous une ouverture ménagée dans ledit carter.

D'une manière générale, le fait que,à chaque retrait d'une cassette, un nettoyage systématique de la cellule magnétique soit réalisé à l'aide d'une brosse rotative permet d'entretenir une tête de lecture de telle maniére qu'elle peut être considérée comme neuve à chaque nouvelle lecture. De la sorte, la qualité du signal lu reste intacte en fonction du temps, les cellules magnétiques peuvent être utilisées à leurs limites extrêmes d'exploitation et les bandes magnétiques ne subissent aucune altération sensible.

D'autres caractéristiques et avantages de l'invention ressortiront de la description qui fait suite d'un mode particulier de réalisation, donné à titre d'exemple en référence au dessin annexé, sur lequel:

- la figure 1 est une vue schématique montrant le principe du dispositif selon l'invention,

- la figure 2 représente le schéma électrique de la commande du moteur d'entraînement du dispositif de nettoyage selon l'invention, et

- les figures 3 et 4 représentent l'agencement mécanique d'un exemple de réalisation du dispositif de nettoyage selon l'invention avec la brosse de nettoyage représentée respectivement en position de repos escamotée et en position de travail en contact avec la tête de lecture.

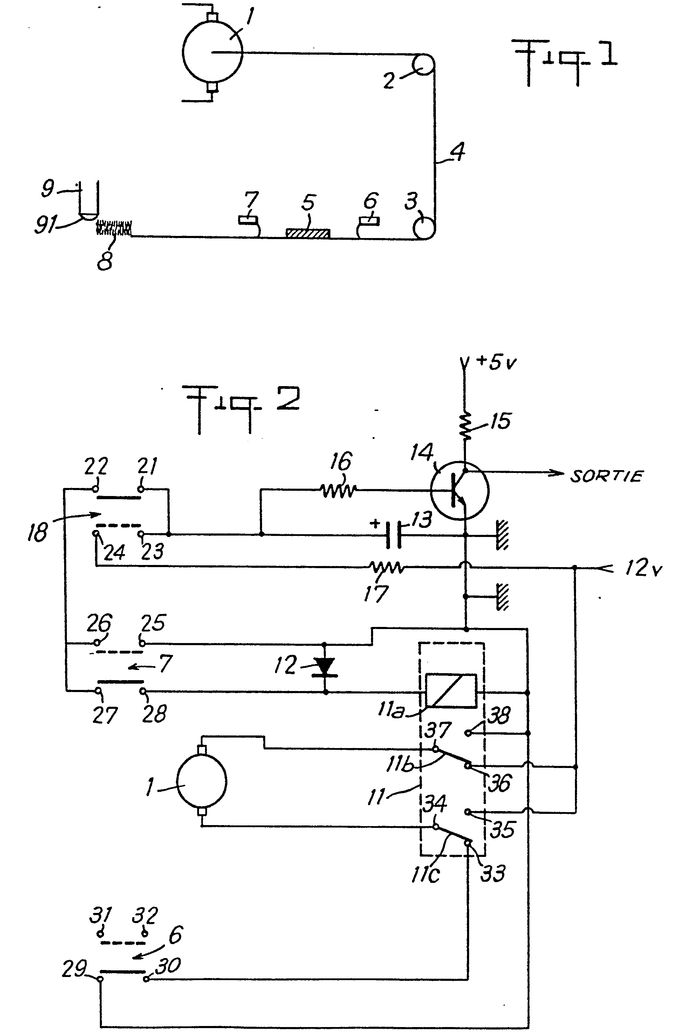

La Figure 1 permet de comprendre le principe mécanique du mouvement de la brosse de nettoyage escamotable 8 qui vient en contact avec une tête de lecture constituée par une cellule magnétique 9, après chaque retrait de cassette de la platine support de l'appareil lecteur de cassettes sur lequel est monté le dispositif de nettoyage selon l'invention.

Au repos, c'est-à-dire lors de la lecture ou de l'enregistrement d'une cassette, ou lorsque l'appareil est hors service, la butée 5, solidaire de la brosse 8 est en contact avec un capteur de position tel qu'un micro-contact 6. La brosse 8 est alors dans une position escamotée. La détection du retrait d'une cassette déclenche alors la mise en marche du moteur à courant continu 1 qui entraîne une courroie 4 guidée par des poulies de renvoi 2 et 3 et capable de communiquer un mouvement à la fois à la brosse 8 et à la butée 5 de manière à amener la brosse 8 en contact avec la face frontale 91 de la tête de lecture 9 qui est prévue pour coopérer avec une bande magnétique. Lorsque la brosse 8 est arrivée en contact avec la tête de lecture 9, la butée 5 est elle-même en contact avec un deuxième capteur de position 7, tel qu'un micro-contact, qui commande l'inversion du sens de marche du moteur 1 et provoque alors le retrait automatique de la brosse 8 qui revient dans sa position initiale pour laquelle la butée 5 est en contact avec le micro-contact 6, ce qui produit l'arrêt du moteur 1.

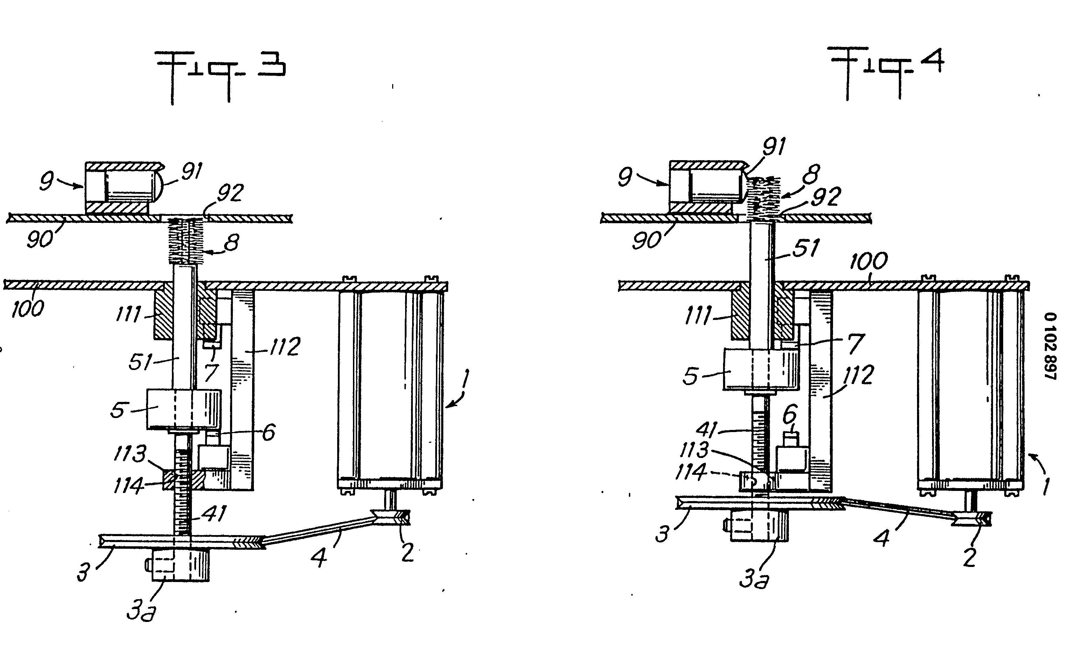

Les figures 3 et 4 montrent un exemple de réalisation dans lequel l'ensemble du dispositif de nettoyage est disposé sous un carter 90 au-dessus duquel est montée la cellule magnétique de lecture 9. Le dispositif de nettoyage est monté sur un support 100 et comporte une brosse 8 capable de traverser une ouverture 92 ménagée dans le carter 90 pour venir dans la position de travail (Fig 4).

La brosse 8, qui peut être amovible, est fixée sur une tige 51 coulissant dans une pièce de guidage 111 solidaire du support 100. La tige 51 est prolongée à sa partie arrière par une tige filetée 41 rendue solidaire, à son extrémité libre, d'une poulie réceptrice 3 à l'aide d'une pièce de fixation 3a. La poulie 3 est entraînée en rotation par une courroie 4 engagée sur une poulie 2 qui est elle-même solidaire de l'arbre de sortie du moteur 1 monté sur le support 100.

La tige filetée 41 est engagée dans un trou taraudé 114 formé dans une pièce fixe 113 montée à l'aide d'un bras 112 sur le support 100. L'entraînement en rotation de la poulie 3 permet ainsi de communiquer à la tige 51 et à la brosse 8 non seulement un mouvement de rotation sur elles-mêmes, mais également un mouvement contrôlé d'avance dans le sens axial des tiges 41,51. La butée 5 solidaire de la tige 51 coopère avec les micro-contacts de fin de course haut et bas 7 et 6 montés sur le bras support 112 de part et d'autre de la butée 5, afin de limiter la course de la tige 51 et provoquer l'inversion du sens de marche du moteur 1 et donc le sens d'avance de la tige 51.

Le circuit électronique de commande du moteur 1, et donc du mouvement de la brosse 8 sera maintenant décrit en référence à la figure 2. On voit sur cette figure 2, représentés en trait continu, les états des micro-contacts 7 et 6 de fin de course lorsque ceux-ci sont à l'état de repos, c'est-à-dire ne sont pas sollicités par la butée 5. L'état des contacts 7 et 6 lorsque ceux-ci sont touchés par la butée 5 est représenté en trait discontinu. De même, le contact 18 de détection de présence de cassette dans l'appareil lecteur-enregistreur est représenté en trait continu dans son état de repos correspondant à l'absence de cassette et en trait discontinu dans son état correspondant à la présence d'une cassette dans l'appareil.

Un relais 11 comprenant une bobine 11a et deux contacts mobiles 11b, 11c permet d'inverser la polarité de la tension d'alimentation aux bornes du moteur 1 afin d'inverser le sens de rotation de celui-ci de la manière qui sera explicitée plus loin. Sur la figure 2 les références numériques 21 à 38 désignent les différentes bornes de connexion des contacts 6, 7, 18 et 11b, 11c.

Le circuit électronique de commande coopérant avec les divers contacts et assurant le fonctionnement du relais 11 selon une séquence prédéterminée permettant de réaliser un aller-retour de la brosse de nettoyage 8 à chaque retrait d'une cassette, peut être réalisé de manière particulièrement simple.

Un transistor 14 dont le collecteur est relié par une résistance 15 à la source d'alimentation, et l'émetteur est à la masse, peut délivrer sur son collecteur un signal de sortie representatif de la presence ou de l'absence d'une cassette. Pour cela, la base du transistor 14 est reliée à une extrémité d'une résistance 16, dont l'autre extrémité est reliée d'une part à la masse par l'intermédiaire d'un condensateur 13 et d'autre part aux bornes 21 et 23 du contact 18 de présence de cassette. La borne 24 du contact 18 est elle-même reliée par l'intermédiaire d'une résistance 17 au pôle positif de l'alimentation du moteur 1. La borne 22 du contact 18 est elle-même reliée aux bornes 26 et 27 du contact 7 de fin de course haut . La borne 28 du contact 7 est reliée à l'extrémité de la bobine 11a non reliée à la masse et la borne 25 du contact 7 est reliée à cette même extrémité de bobine par l'intermédiaire d'une diode 12. Les bornes 29 et 38 du contact 6 de fin de course bas et du commutateur 11b, 11c sont reliées à la masse. Les bornes 35 et 36 du commutateur 11b, 11c sont reliées au pôle positif de l'alimentation du moteur 1. Les bornes 30 et 33 du contact 6 et du commutateur 11b, 11c sont reliées ensemble, et les bornes 34, 37 du commutateur 11b, 11c sont reliées au moteur 1.

Le fonctionnement du circuit de la figure 2 est le suivant. Lors de la mise d'une cassette dans l'appareil, le contact 18 de présence cassette est dans sa position représentée en pointillés et relie les bornes 23 et 24. La tension d'alimentation positive du moteur 1 (par exemple de 12 volts) est alors amenée sur la base du transistor 14 par l'intermédiaire des résistances 17 et 16. Le transistor 14 est saturé, la sortie sur le collecteur est à OV et le condensateur 13 se charge.

Lorsque la cassette est enlevée de l'appareil, le contact 18 de présence cassette revient entre les bornes 21 et 22 dans la position représentée en trait plein. La brosse 8 étant alors dans sa position basse, seul le contact 6 de fin de course bas est dans sa position activée entre les bornes 31 et 32 tandis que le contact 7 de fin de course haut est dans sa position de repos entre les bornes 27 et 28. Le condensateur 13 est ainsi mis en série avec la bobine 11a du relais 11 et se décharge dans cette dernière la diode 12 empêchant un retour direct du courant à la masse. Le commutateur 11a, 11b passe alors de sa position représentée sur la figure 2 dans la position où les bornes 34 et 35 sont reliées par le contact 11c et les bornes 37 et 38 sont reliées par le contact 11b. Le moteur 1 est excité et entraîne la brosse 8 de manière à déplacer celle-ci vers le haut. La butée 5 quitte le contact 6 qui est commuté dans sa position représentée en trait continu entre les bornes 29 et 30.

Lorsque la brosse 8 est arrivée dans sa position de travail en contact avec la surface 91 de la tête de lecture, la butée 5 arrive également en contact avec le micro-contact 7 de fin de course haut qui passe dans sa position représentée en trait discontinu entre les bornes 25 et 26. Grâce à la liaison directe entre la borne 25 et la masse, l'entrée de la bobine 11a est mise à la masse et les contacts 11b, 11c reviennent à leur position initiale respectivement entre les bornes 37 et 36, et entre les bornes 34 et 33, dans la position représentée sur la figure 2. Le sens de marche du moteur 1 est alors inversé, et la brosse redescend dans sa position initiale où la butée 5 vient toucher le contact 6 et, faisant repasser celui-ci dans sa position activée représentée en trait discontinu entre les bornes 31 et 32, déconnecte l'alimentation du moteur. Le système est alors prêt à fonctionner de nouveau dés qu'une cassette aura été replacée dans l'appareil, ce qui rechargera le condensateur 13, puis retirée de l'appareil, ce qui redéclenchera le mouvement de va-et-vient de la brosse 8 par le retour du contact 18 dans sa position représentée en trait continu.

Le système de commande décrit ci-dessus est ainsi particulièrement simple et robuste et très peu coûteux à fabriquer, puisque les éléments actifs sont peu nombreux. Naturellement, des circuits électroniques équivalents pourraient être substitués au montage représenté sur la figure 2 en vue d'obtenir la même séquence de commande du moteur 1.

**Revendications**

1. Dispositif de nettoyage automatique d'une tête magnétique de lecture d'une bande magnétique pour appareil enregistreur à cassette, comprenant une brosse (8) escamotable capable de venir en contact avec la tête de lecture (9), des moyens (18) de détection de présence de cassette dans l'appareil, et des moyens (1 à 4) d'entraînement de la brosse escamotable (8) commandés par les moyens (18) de détection de présence de cassette dans l'appareil, caracterise en ce qu'il comprend en outre des capteurs (6, 7) de la position de la brosse (8) constitués par des micro-contacts de fin de course fixes coopérant avec une butée (5) solidaire d'une tige (51,41) de support de la brosse (8) déplaçable perpendiculairement à la tête de lecture (9) , et des moyens de commutation (11 à 17) associes auxdits capteurs (6, 7) aux moyens (18) de detection de presence de cassette, et aux moyens (1 à 4) d'entraînement de la brosse escamotable, pour assurer l'entraînement de façon sélective en rotation et en translation de la brosse escamotable (8) à chaque retrait d'une cassette, de telle sorte que la brosse (8) présente au moins un mouvement d'aller et retour au cours duquel elle vient en contact avec la tête magnétique (9) en présentant un mouvement de rotation sur elle-même, et en ce que les moyens d'entraînement et de transmission de mouvement associés à la brosse (8) comprennent un moteur électrique à courant continu (1), un système de poulies et courroie (2, 3, 4), un écrou fixe de guidage (114) et une tige filetée (41) solidaire, d'une part d'une poulie réceptrice (3) et, d'autre part, de la tige (51) de support de la brosse (8).

2. Dispositif de nettoyage selon la revendication 1, caractérisé en ce que les moyens de commutation (11 à 17) comprennent un relais (11) de mise en marche et d'inversion du sens de marche du moteur (1) d'entraînement en rotation de la brosse (8) lequel relais (11) est commandé en fonction de l'état des capteurs (6, 7) de la position de la brosse (8); et un circuit électronique (12 à 17) qui n'autorise la commande du relais (11) que si les moyens (18) de détection de présence de cassette signalent le retrait d'une cassette.

3. Dispositif de nettoyage selon la revendication 2, caractérisé en ce que le circuit électronique (12 à 17) comprend un transistor (14) dont la base est reliée à l'émetteur, lui-même mis à la masse, par une résistance (16) et un condensateur (13), en série, le point commun de la résistance (16) et du condensateur (13) étant lui-même relié par l'intermédiaire d'un contact (18) de présence de cassette soit a une source d'alimentation en tension, soit à la borne de la bobine (11a) du relais (11) qui n'est pas connectée a la masse, lorsque le contact de Fin de course haut (7) est dans sa position de repos.

4. Dispositif de nettoyage selon la revendication 3, caractérisé en ce que les capteurs (6,7) de la position de la brosse (8) sont constitués par des contacts de fin de course, en ce que le contact de fin de course bas (6) est capable, à l'état excité, d'assurer une liaison entre la masse et une borne susceptible d'être connectée par le relais (11) à une borne d'alimentation du moteur (1) et en ce que le contact de fin de course haut (7) est capable, à l'état excité, d'assurer une liaison entre le contact de présence de cassette (18) et la borne de la bobine (11a) du relais (11) qui n'est pas connectée a la masse.

5. Dispositif de nettoyage selon l'une quelconque des revendications 1 à 4, caractérisé en ce qu'il est disposé dans un carter (90) sous la tête de lecture (9) et en ce que la brosse (8) est située à l'état de repos sous une ouverture (92) ménagée dans ledit carter (90).

**Patentansprüche**

1. Automatische Reinigungsvorrichtung eines Magnet-Lesekopfes eines Magnetbandes für ein Kasettenaufnahmegerät, umfassend eine ein- und ausziehbare Bürste (8), die mit dem Lesekopf (9) in Kontakt gelangen kann, Mittel (18) zum Nachweisen des Vorhandenseins einer Kassette im Gerät und von den Mitteln (18) zum Nachweisen des Vorhandenseins einer Kassette im Gerät gesteuerte Mittel (1 bis 4) zum Antreiben der ein- und ausziehbaren Bürste (8), dadurch gekennzeichnet, daß sie weiters Positionsfühler (6, 7) der Bürste (8), die aus feststehenden Endlage-Mikrokontakten gebildet sind, welche mit einem Anschlag (5), der mit einer senkrecht zum Lesekopf (9) verschiebbaren Trägerstange (51, 41) der Bürste (8) verbunden ist, zusammenwirken, und mit den Fühlern (6, 7) in Verbindung stehende Umschaltmittel (11 bis 17) zu den Mitteln (18) zum Nachweisen des Vorhandenseins einer Kassette und zu den Mitteln (1 bis 4) zum Antreiben der ein- und ausziehbaren Bürste zur Gewährleistung des Antriebs der einund ausziehbaren Bürste (8) auf selektive Weise in Rotation und in Verschiebebewegung bei jeder Entnahme einer Kassette umfaßt, sodaß die Bürste (8) mindestens eine Hin- und Herbewegung macht, in deren Verlauf sie unter Ausführen einer Rotationsbewegung um sich selbst mit dem Magnetkopf (9) in Kontakt gelangt, und daß die mit der Bürste (8) in Verbindung stehenden Antriebs- und Bewegungsübertragungsmittel einen Gleichstrom-Elektromotor (1), ein System aus Rollen und Treibriemen (2, 3, 4), eine feststehende Führungsmutter (114) und eine Gewindestange (41), die einerseits mit einer angetriebenen Rolle (3) und anderseits mit der Trägerstange (51) der Bürste (8) verbunden ist, umfassen.

2. Reinigungsvorrichtung nach Anspruch 1, dadurch gekennzeichnet, daß die Umschaltmittel (11 bis 17) ein Relais (11) zum Ingangsetzen und zur Laufrichtungsumkehr des Motors (1) für den Rotationsantrieb der Bürste (8) umfassen, welches Relais (11) in Abhängigkeit vom Zustand der Positionsfühler (6, 7) der Bürste (8) gesteuert ist, und einen elektronischen Kreis (12 bis 17) umfassen, der die Steuerung des Relais (11) nur dann gestattet, wenn die Mittel (18) zum Nachweisen des Vorhandenseins einer Kassette die Entnahme einer Kassette signalisieren.

3. Reinigungsvorrichtung nach Anspruch 2, dadurch gekennzeichnet, daß der elektronische Kreis (12 bis 17) einen Transistor (14) umfaßt, dessen Basis mit dem Emitter verbunden ist, der selbst über einen Widerstand (16) und einen Kondensator (13) in Serie auf Masse geschaltet ist, wobei der gemeinsame Punkt des Widerstandes (16) und des Kondensators (13) wiederum über einen Kontakt (18) des Vorhandseins einer Kassette entweder mit einer Spannungsquelle oder mit der Klemme der Spule (11a) des Relais (11) verbunden ist, die nicht auf Masse geschaltet ist, wenn sich der Kontakt (7) der oberen Endlage in seiner Ruheposition befindet.

4. Reinigungsvorrichtung nach Anspruch 3, dadurch gekennzeichnet, daß die Positionsfühler (6, 7) der Bürste (8) durch Endlage-Kontakte gebildet sind, daß der untere Endlage-Kontakt (6) in erregtem Zustand eine Verbindung zwischen der Masse und einer mittels des Relais (11) mit einer Speiseklemme des Motors (1) verbindbaren Klemme herstellen kann, und daß der obere Endlage-Kontakt (7) in erregtem Zustand eine Verbindung zwischem dem Kontakt (18) des Vorhandenseins einer Kassette und der Klemme der Spule (11a) des Relais (11), die nicht auf Masse geschaltet ist, gewährleisten kann.

5. Reinigungsvorrichtung nach einem der Ansprüche 1 bis 4, dadurch gekennzeichnet, daß sie in einem Gehäuse (90) unter dem Lesekopf (9) angeordnet ist und sich die Bürste (8) im Ruhezustand unterhalb einer im Gehäuse (90) vorgesehenen Öffnung (92) befindet.

## Claims

1. Automatic device for cleaning a magnetic reading head of a magnetic tape intended for a cassette recorder, comprising a retractable brush (8) adapted to be in contact with the reading head (9), means (18) for detecting the presence of a cassette inside the apparatus and means (1 to 4) for driving the retractable brush (8) controlled by the means (18) for detecting the presence of a cassette inside the apparatus, characterized in that it further comprises sensors (6, 7) of the position of the brush (8) constituted by fixed end of travel microcontacts cooperating with a stop member (5) integral with a brush-supporting rod (51, 41) movable perpendicularly to the reading head (9), and switching means (11 to 17) operationally coupled to said sensors (6, 7) to the means (18) for detecting the presence of a cassette, and to the means (1, 4) for driving the retractable brush in order to ensure selective drive in rotation and in translation of the retractable brush (8) on every cassette withdrawal, so that the brush (8) is imparted with a reciprocating movement during which it is in contact with the magnetic head (9) while rotating on its axis, and in that the driving means and the means for transmitting the movement operationally coupled to the brush (8) comprise a direct current electrical motor (1), a system of pulleys and belt (2, 3, 4), a fixed guiding nut (114) and a threaded rod (41) integral on the one hand with a receiving pulley (3) and on the other hand with the brush-supporting rod (51).

2. Cleaning device according to claim 1, characterized in that the switching means (11 to 17) comprise a relay (11) for starting and reversing the motor driving the brush (8) in rotation, said relay (11) being controlled as a function of the state of the sensors (6, 7), of the position of the brush (8); and an electronic circuit (12 to 17) which authorizes control of the relay (11) only when the means (18) for detecting the presence of a cassette indicate the withdrawal of a cassette.

3. Cleaning device according to claim 2, characterized in that the electronic circuit (12 to 17) comprises a transistor (14) of which the base is connected to the emitter, the latter being earthed via a resistor (16) and a capacitor (13), in series, the common point of the resistor (16) and the capacitor (18) being itself connected, via a contact (18) of presence öf a cassette, either to a voltage supply source or to the terminal of the coil (11a) of the relay (11) which is not earthed, when the high end of travel contact (17) is in its rest position.

4. Cleaning device according to claim 3, characterized in that the sensors (6,7) of the position of the brush (8) are constituted by end of travel contacts, in that the low end of travel contact (6) is capable, in the energized state, to provide a connection between the earth and a terminal adapted to be connected via relay (11) to a terminal supplying the motor (1), and in that the high end of travel contact (7) is capable, in the energized state, to provide a connection between the contact of presence of a cassette (18) and the terminal of the coil (11a) of the relay which is not earthed.

5. Cleaning device according to any one of claims 1 to 4, characterized in that it is placed inside a housing (90) under the reading head (9) and in that the brush (8) is situated in the state of rest position under an opening (92) made in said housing (90).

0 102 897

Fig. 1

Fig. 2

+5v

SORTIE

12v

# Fig-3

# Fig-4

0 102 897